# EUROPEAN PATENT APPLICATION

(11) **EP 1 607 851 A2**
(43) Date of publication of application: **21.12.2005**
(21) Application number: 05011924.7
(22) Date of filing: 02.06.2005
(51) Int. Cl.: G06F 3/033

(54) **Position detecting device**

(30) Priority: 18.06.2004 JP 2004180730
(71) Applicant: Wacom Co., Ltd., Saitama 349-1148 (JP)
(72) Inventor: Oda, Yasuo, Kuki-shi Saitama 346-0004 (JP)
(74) Representative: Richardt, Markus Albert

(57) **Abstract**

The present invention provides a position detecting device capable of detecting a position specified by a pointing device with reliability in low voltage driving. In the position detecting device for transmitting signals from a transmitting coil included therein to a pointing device and receiving signals from the pointing device through sensor coils included therein through electromagnetic coupling to detect the specified position, a capacitor for series resonance is connected to the transmitting coil. A drive current to be supplied to the transmitting coil is controlled such that each of time kT during which the drive current in a supply-stopped state rises to a maximum amplitude, time mT during which the drive current has the maximum amplitude, and time nT during which the drive current with the maximum amplitude falls to the amplitude in the supply-stopped state is an integer multiple of the period of the drive current.

## Description

### BACKGROUND OF THE INVENTION

### 1. Field of the Invention

The present invention relates to a position detecting device, serving as an input device for a computer aided design (CAD), a computer, a personal digital assistant (PDA), a mobile phone, or a personal handyphone system (PHS), for detecting a position specified by a pointing device through electromagnetic coupling.

### 2. Description of the Related Art

Hitherto, electromagnetic-coupling type position detecting devices have been used as input devices for CAD and those for computers. This type of position detecting device transmits and receives signals to/from a pointing device by electromagnetic coupling to detect a position specified by the pointing device.

For example, according to a system disclosed in Japanese Unexamined Patent Application Publication No. 5-88811 (Patent Document 1), one transmitting coil is arranged around a sensor area in a position detecting device.

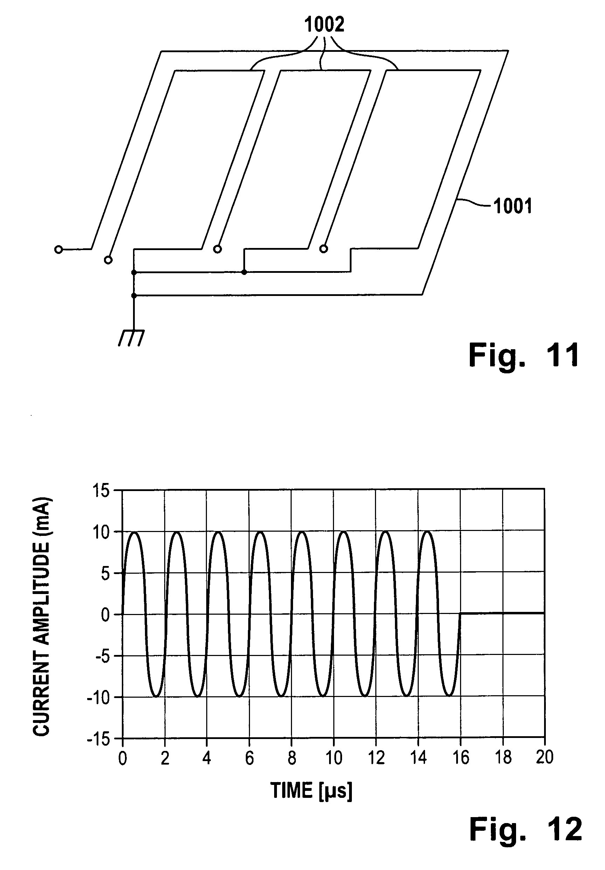

Fig. 11 is a schematic diagram of the structure of a sensor unit of the position detecting device disclosed in Patent Document 1. Referring to Fig. 11, one transmitting coil 1001 is arranged around a plurality of sensor coils 1002. For the sake of simplicity, only the sensor coils 1002 in the X direction are shown in Fig. 11 and those in the Y direction are omitted.

Referring to Fig. 11, the transmitting coil 1001 transmits position detection signals to a pointing device (not shown) by electromagnetic coupling. The sensor coils 1002 are sequentially selectively driven to sequentially receive position indication signals from the pointing device through electromagnetic coupling. A position specified by the pointing device is detected on the basis of the signals received by the sensor coils 1002.

As mentioned above, since the position detecting device disclosed in Patent Document 1 uses the one transmitting coil 1001, the circuitry for transmitting position detection signals can be simplified.

In the above position detecting device, however, a drive current serving as alternating signals is supplied such that the alternating signals each having a maximum amplitude are continuously generated as shown in Fig. 12 for the length of predetermined unit time to drive the transmitting coil 1001. As shown in Fig. 13, therefore, the voltage amplitude between the transmitting coil 1001 and a reference potential is high. Disadvantageously, a circuit element compatible with a high voltage is required as a constant current driver of the transmitting coil 1001. In addition, a high-voltage power supply is also needed.

To overcome the above disadvantages, according to an approach, a capacitor for series resonance is connected to the transmitting coil 1001 to constitute a series resonant circuit. However, the series resonant circuit is merely realized, thus increasing a transient voltage as shown in Fig. 14. Disadvantageously, it is difficult to realize low voltage driving.

In other words, in Fig. 14, although the voltage across the transmitting coil 1001 is low, even if the capacitor is connected to the transmitting coil 1001 to constitute the series resonant circuit, the capacitor is charged at the start time of current supply (i.e., at the rising edge of a supply current). Accordingly, this state equals a state in which a DC voltage Vc is applied as a bias voltage to the capacitor. Thus, the sum of the voltage across the capacitor and that across the transmitting coil 1001 is still high. As mentioned above, therefore, the circuit for driving the transmitting coil requires the circuit element compatible with a high voltage. The high-voltage power supply is also needed.

### SUMMARY OF THE INVENTION

Accordingly, it is an object of the present invention to provide a position detecting device capable of detecting a position specified by a pointing device with reliability in low voltage driving.

The present invention provides a position detecting device for transmitting and receiving signals to/from a pointing device, which has at least one coil and is used to specify a position, through electromagnetic coupling to detect the position specified by the pointing device, the position detecting device including: a transmitting coil for transmitting position detection signals to the pointing device; a plurality of sensor coils for receiving signals from the pointing device; a signal transmitting unit for supplying a drive current to the transmitting coil such that the transmitting coil generates the position detection signals; a receiving unit for sequentially selecting the sensor coils to receive the signals from the pointing device; a detecting unit for detecting the position specified by the pointing device on the basis of the signals received by the receiving unit; and a capacitor connected to the transmitting coil to constitute a series resonant circuit, wherein when starting or stopping the supply of the drive current to the transmitting coil, the signal transmitting unit controls the drive current such that the voltage across the capacitor becomes an alternating signal concentrated at a reference potential. For example, the alternating signal performs an oscillation around the reference potential. During the signal rise time the oscillation has a negative damping coefficient, thus rising in magnitude, whereas during the signal fall time the oscillation has a positive damping coefficient.

Advantageously, when starting or stopping the supply of the drive current to the transmitting coil, the signal transmitting unit controls the drive current such that the voltage across the capacitor becomes an alternating signal concentrated at the reference potential.

Further, the present invention provides a position detecting device for transmitting and receiving signals to/from a pointing device, which has at least one coil and is used to specify a position, through electromagnetic coupling to detect the position specified by the pointing device, the position pointing device including: a transmitting coil for transmitting position detection signals to the pointing device; a plurality of sensor coils for receiving signals from the pointing device; a signal transmitting unit for supplying a drive current to the transmitting coil such that the transmitting coil generates the position detection signals; a receiving unit for sequentially selecting the sensor coils to receive the signals from the pointing device; a detecting unit for detecting the position specified by the pointing device on the basis of the signals received by the receiving unit; and a capacitor connected to the transmitting coil to constitute a series resonant circuit, wherein when starting the supply of the drive current to the transmitting coil, the signal transmitting unit supplies the drive current such that time during which the drive current in a supply-stopped state rises to a maximum amplitude is approximately an integer multiple of the period of the drive current, and when stopping the supply of the drive current to the transmitting coil, the signal transmitting unit supplies the drive current such that time during which the drive current with the maximum amplitude falls to the amplitude in the supply-stopped state is approximately an integer multiple of the period of the drive current.

Advantageously, when starting the supply of the drive current to the transmitting coil, the signal transmitting unit supplies the drive current such that time during which the drive current in the supply-stopped state rises to the maximum amplitude is approximately an integer multiple of the period of the drive current, and when stopping the supply of the drive current to the transmitting coil, the signal transmitting unit supplies the drive current such that time during which the drive current with the maximum amplitude falls to the amplitude in the supply-stopped state is approximately an integer multiple of the period of the drive current.

Preferably, while supplying the drive current to the transmitting coil, the signal transmitting unit supplies the drive current such that time during which the drive current with the maximum amplitude is supplied is approximately an integer multiple of the period of the drive current.

The signal transmitting unit may include: an alternating-signal generating unit for generating an alternating signal having a maximum amplitude at a predetermined level; an amplitude control unit for controlling the amplitude of the alternating signal generated from the alternating-signal generating unit such that, at the rising edge of the alternating signal, time during which the alternating signal in a supply-stopped state rises to the maximum amplitude is approximately an integer multiple of the period of the alternating signal, and when the supply of the drive current to the transmitting coil is stopped, time during which the alternating signal with the maximum amplitude falls to the amplitude in the supply-stopped state is approximately an integer multiple of the period of the alternating signal; and a current supply unit for supplying the drive current to the transmitting coil, the current having a waveform corresponding to the alternating signals with the amplitudes controlled by the amplitude control unit.

While the drive current is being supplied to the transmitting coil, the amplitude control unit may control the amplitude of the alternating signal such that time during which the alternating signals each having the maximum amplitude are continuously generated is approximately an integer multiple of the period of the alternating signal. Preferably, the current supply unit supplies the drive current to the transmitting coil, the current having a waveform corresponding to the alternating signals with the amplitudes controlled by the amplitude control unit.

Preferably, the amplitude control unit controls the amplitudes of the alternating signals such that the positive and negative envelopes of the amplitudes each have a trapezoidal pattern.

Preferably, the transmitting coil includes a plurality of transmitting coil segments and the capacitor is a single capacitor, of which the end is connected to the transmitting coil segments.

Preferably, a resonance frequency of each series resonant circuit, including one transmitting coil segment and the capacitor, is substantially equal to the period of the drive current.

The signal transmitting unit may select any one of the transmitting coil segments according to the position specified by the pointing device and supply the drive current to the selected transmitting coil segment so as to transmit the position detection signals to the pointing device.

Preferably, the transmitting coil segments are concentrically arranged.

Preferably, the signal transmitting unit divides a sensor area, where the transmitting coil segments are arranged, into a plurality of area segments, selects any one of the transmitting coil segments in the area segment, where the pointing device is positioned, such that the position detection signals with the highest signal strength are supplied to the pointing device, and drives the selected coil segment to supply the position detection signals to the pointing device.

On the basis of the relative positional relationship between the position of the pointing device detected by the detecting means and the selected transmission soil segment, the signal transmitting unit may drive the selected transmitting coil segment such that the phase of each position detection signal to be supplied to the pointing device is not reversed.

According to the present invention, an electromagnetic-coupling type position detecting device can detect a position specified by a pointing device with reliability in low voltage driving.

The present invention can be applied to input devices for a computer aided design (CAD), a personal digital assistant (PDA), a mobile phone, and a personal handyphone system (PHS), and a detecting device for detecting three-dimensional information indicating a position specified by an input device in a three-dimensional space.

The present invention can also be applied to a circuit for supplying current to a coil for various purposes, such as to generate an identification code of RFID, a signal, or energy.

In another aspect the present invention relates to an electronic circuit for electromagnetic coupling with an external device, comprising a transmitting coil for transmitting detection signals to the external device; a plurality of sensor coils for receiving signals from the external device; signal transmitting means for supplying a drive current to the transmitting coil; receiving means for sequentially selecting the sensor coils to receive the signals from the external device; and a capacitor connected to the transmitting coil to constitute a series resonant circuit, wherein the signal transmitting means being adapted to control the drive current such that the voltage across the capacitor becomes an alternating signal concentrated at a reference potential.

In accordance with an embodiment of the invention, the receiving means is adapted to receive an RFID signal from the external device and further comprising means for detection of an ID in the received RFID signal. Hence, the external device is a so-called RFID tag that is powered by electromagnetic coupling with the electronic circuit and that sends out an RF signal carrying an identifier (ID) in response to the electromagnetic coupling.

### BRIEF DESCRIPTION OF THE DRAWINGS

Fig. 1 is a block diagram of a position detecting device according to an embodiment of the present invention;
Fig. 2 is a block diagram showing components of the position detecting device according to the present embodiment;
Fig. 3 is a block diagram showing components of the position detecting device according to the present embodiment;
Fig. 4 is a signal waveform chart explaining the operation according to the present embodiment;
Fig. 5 is another signal waveform chart explaining the operation according to the present embodiment;
Fig. 6 is a timing chart according to the present embodiment;
Fig. 7 is a diagram explaining the operation according to the present embodiment;
Fig. 8 is a diagram explaining the operation according to the present embodiment;
Fig. 9 is a diagram explaining the operation according to the present embodiment;
Fig. 10 is a diagram explaining the operation according to the present embodiment;
Fig. 11 is a schematic diagram explaining the operation of a conventional position detecting device;
Fig. 12 is a diagram explaining the operation of the conventional position detecting device;
Fig. 13 is a diagram explaining the operation of the conventional position detecting device; and
Fig. 14 is a diagram explaining the operation of the conventional position detecting device.

### DESCRIPTION OF THE PREFERRED EMBODIMENTS

A position detecting device according to a preferred embodiment of the present invention and a current drive circuit suitable for the position detecting device will now be described below with reference to the drawings. The same components in respective diagrams are designated by the same reference numerals, respectively.

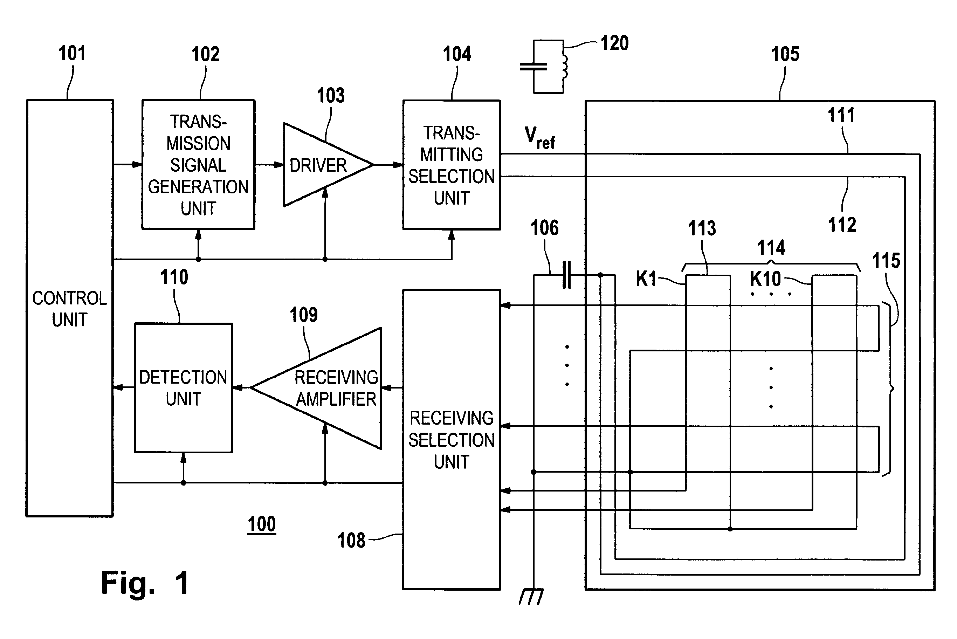

Fig. 1 is a block diagram of a position detecting device 100 according to the preferred embodiment of the present invention.

Referring to Fig. 1, an electromagnetic-coupling type position detecting system is composed of a pointing device 120 used to specify a position and the position detecting device 100 for detecting the position specified by the pointing device 120 through electromagnetic coupling.

The pointing device 120 including at least one coil is used to specify a position. The coil is connected to a capacitor. The coil and the capacitor constitute a resonant circuit.

The position detecting device 100 includes: a control unit 101; a transmission signal generation unit 102 for generating a signal for position detection; a constant current driver 103 for generating a predetermined constant-current signal (drive current) serving as an alternating signal to drive a transmitting coil; a transmitting selection unit 104 for selecting a transmitting coil, to which the position detection signal is supplied, and driving the selected coil with a drive current supplied from the constant current driver 103; a sensor unit 105 serving as a sensor area; a capacitor for resonance 106; a receiving selection unit 108; a receiving amplifier 109; and a detection unit 110.

The control unit 101 functions as signal transmitting means, receiving means, and detecting means. The transmission signal generation unit 102, the constant current driver 103, and the transmitting selection unit 104 constitute signal transmitting means. The receiving selection unit 108 and the receiving amplifier 109 constitute receiving means. The constant current driver 103 functions as current supply means. The detection unit 110 functions as detecting means.

The transmission signal generation unit 102, the driver 103, the transmitting selection unit 104, coils 111 and 112, and the capacitor 106 constitute a current supply circuit.

The control unit 101 controls the entire position detecting device 100 and also controls the transmission signal generation unit 102, the driver 103, the transmitting selection unit 104, the receiving selection unit 108, the receiving amplifier 109, and the detection unit 110.

Under the control of the control unit 101, the transmission signal generation unit 102 generates a position detection signal to detect a position specified by the pointing device 120. The constant current driver 103 amplifies the position detection signal supplied from the transmission signal generation unit 102 and then generates the resultant signal to the transmitting selection unit 104. Under the control of the control unit 101, the transmitting selection unit 104 selects any one of the transmitting coils 111 and 112 and supplies the position detection signal to the selected transmitting coil to drive the coil.

According to the present embodiment, the device 100 includes the two transmitting coils 111 and 112. The transmitting coils 111 and 112 are arranged concentrically, i.e., such that the transmitting coils 111 and 112 have substantially the same center. The outer transmitting coil 111 (in the outer portion of the sensor area 105) is arranged around the inner transmitting coil 112 (in the inner portion of the sensor area 105).

The transmitting coils 111 and 112 are connected to one end of the single capacitor 106. The capacitor 106 and each of the transmitting coils 111 and 112 constitute a series resonant circuit. In other words, the capacitor 106 and the transmitting coil 111 constitute a series resonant circuit. The capacitor 106 and the other transmitting coil 112 also constitute a series resonant circuit. A resonant frequency of each series resonant circuit is set so as to be equal to the frequency of a signal supplied to the transmitting coil 111 or 112 through the transmitting selection unit 104. Since the capacitor 106 and each of the transmitting coils 111 and 112 constitute the series resonant circuit as mentioned above, a signal can be transmitted to the pointing device 120 from each of the transmitting coils 111 and 112 in low voltage driving. It is unnecessary that the resonant frequency of each series resonant circuit is exactly the same as the frequency of a signal supplied to each of the transmitting coils 111 and 112. The resonant frequency may include a deviation of, e.g., ±40% of the signal frequency.

The sensor unit 105 includes the transmitting coils 111 and 112 and a receiving unit 113 having a plurality of sensor coils. The receiving unit 113 includes a plurality of X-directional sensor coils 114 arranged in the X direction and a plurality of Y-directional sensor coils 115 arranged in the Y direction orthogonal to the X direction.

For the outer transmitting coil 111 and the inner transmitting coil 112, at least one of the coils 111 and 112 can be arranged around the sensor coils 114 and 115. Alternatively, both of the coils 111 and 112 can be arranged so as to overlap the sensor coils 114 and 115.

Under the control of the control unit 101, the receiving selection unit 108 sequentially selects the sensor coils 114 and 115 to scan the coil, detects a detection signal from the selected sensor coil 114 or 115, and generates the detection signal to the receiving amplifier 109. Under the control of the control unit 101, the receiving amplifier 109 amplifies the detection signal supplied from the receiving selection unit 108 and generates the resultant signal to the detection unit 110. On the basis of the detection signals supplied from the receiving amplifier 109, the detection unit 110 calculates the X and Y coordinates of a position specified by the pointing device 120 and then generates data indicating the coordinates to the control unit 101. As will be described below, the control unit 101 performs various control operations, i.e., controls the phase of a signal of the transmission signal generation unit 102 and controls the transmitting selection unit 104 to select any one of the transmitting coils 111 and 112 according to the X and Y coordinates of the detected position of the pointing device 120.

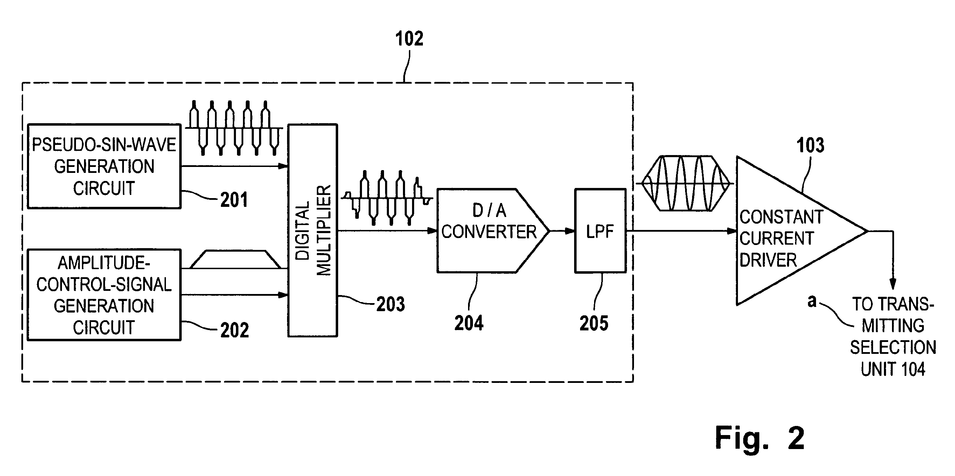

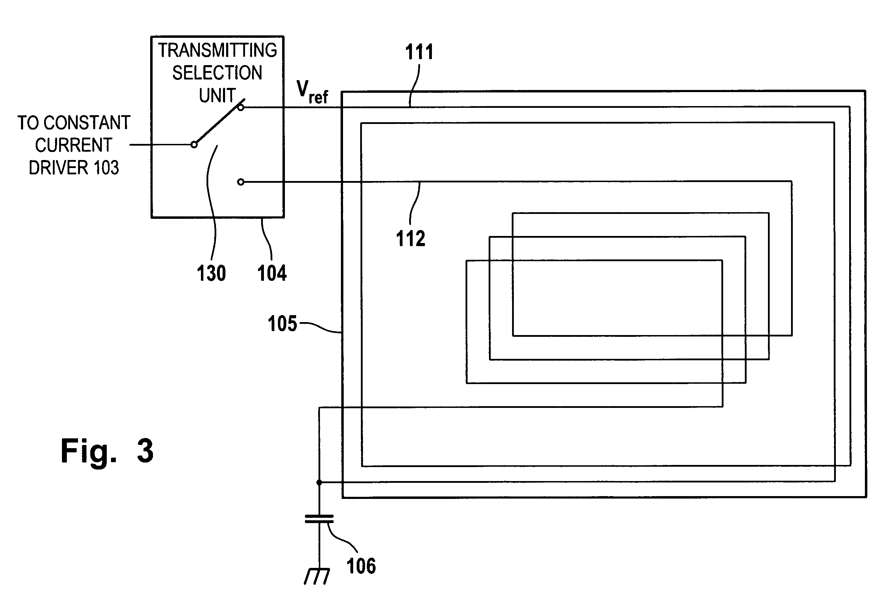

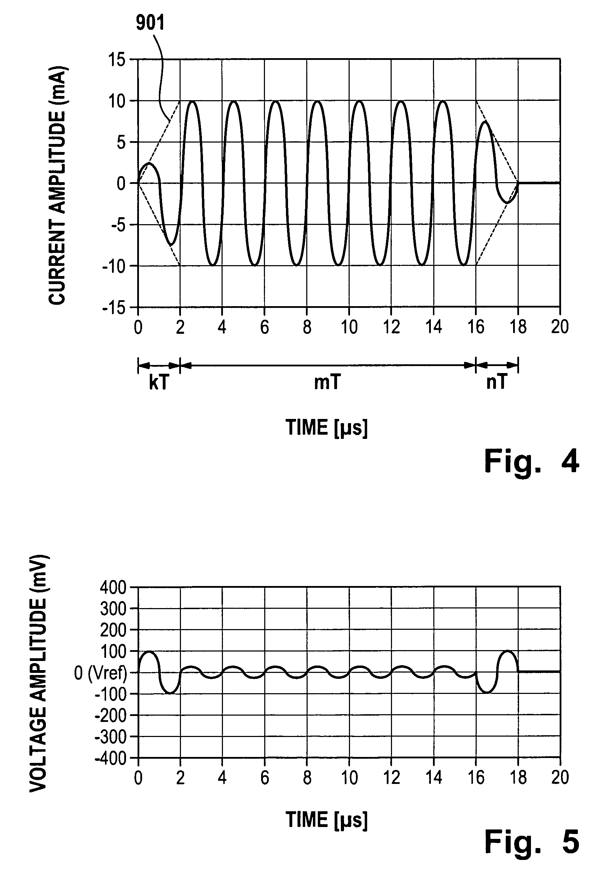

Figs. 2 and 3 are block diagrams partially showing components of the position detecting device 100 in detail. Fig. 4 is a signal waveform chart of a drive current serving as alternating signals to be supplied from the transmitting selection unit 104 to the transmitting coil 111 or 112 according to the present embodiment. The waveform of the drive current corresponds to the length of predetermined unit time. Fig. 5 is a waveform chart of a voltage signal serving as an alternating signal generated from the transmitting selection unit 104, the waveform of the voltage amplitude between a predetermined potential and the transmitting coil 111 or 112 corresponding to the length of predetermined unit time.

Referring to Fig. 2, the transmission signal generation unit 102 includes: a pseudo-SIN-wave generation circuit 201 serving as alternating-signal generating means for generating a pseudo sine (SIN) wave as an alternating signal; an amplitude-control-signal generation circuit 202 serving as amplitude control means for generating an amplitude control signal in order to shape each envelope of the amplitudes of the signals generated from the pseudo-SIN-wave generation circuit 201 into a predetermined form; a digital multiplier 203 for multiplying the pseudo sine wave signal of the pseudo-SIN-wave generation circuit 201 and the amplitude control signal of the amplitude-control-signal generation circuit 202 to control the amplitude of the pseudo sine wave signal using the amplitude control signal and generating the resultant signal having a waveform with the controlled amplitude; a digital-to-analog (D/A) converter 204 for converting the output signal of the digital multiplier 203 into an analog signal; and a low-pass filter (LPF) 205 for filtering the output signal of the D/A converter 204 such that the low frequency component of the signal passes therethrough and generating the component as a drive signal to the constant current driver 103. The digital multiplier 203, the D/A converter 204, and the LPF 205 constitute current supply means.

Referring to Fig. 3, the transmitting selection unit 104 has a selector switch 130. Under the control of the control unit 101, the selector switch 130 is switched to selectively supply the drive signal of the constant current driver 103 to the transmitting coil 111 or 112. The transmitting coil 111 is arranged in the outer portion of the sensor unit 105 such that the coil is wired a plurality of times around the transmitting coil 112. The transmitting coil 112 is arranged concentrically with the outer transmitting coil 111 such that the coil 112 is wired a plurality of times within the outer transmitting coil 111.

The amplitude-control-signal generation circuit 202 generates an amplitude control signal to control the amplitudes of the output signals of the pseudo-SIN-wave generation circuit 201 such that the positive and negative envelopes of the amplitudes of the signals output from the pseudo-SIN-wave generation circuit 201 each have a trapezoidal pattern. In addition, the amplitude-control-signal generation circuit 202 controls the amplitude of the output signal thereof such that time kT, during which the output signal of the pseudo-SIN-wave generation circuit 201 in a supply-stopped state rises to a maximum amplitude, equals kT where k is a factor and T is the period of the output signal of the pseudo-SIN-wave generation circuit 201. The factor k is represented by a positive integer and includes a deviation of ±35% of the integer. The factor k may include a deviation exceeding ±35% of the integer.

The amplitude-control-signal generation circuit 202 further controls the amplitude of the output signal thereof such that time nT, during which the maximum-amplitude output signal of the pseudo-SIN-wave generation circuit 201 falls to the amplitude in the supply-stopped state, equals nT where n is a factor and T is the period of the output signal of the pseudo-SIN-wave generation circuit 201. The factor n is represented by a positive integer and includes a deviation of ±35% of the integer. The factor n may include a deviation exceeding ±35% of the integer.

Further, the amplitude-control-signal generation circuit 202 controls the amplitude of the output signal thereof such that time mT, during which the output signals with the maximum amplitude are continuously generated from the pseudo-SIN-wave generation circuit 201, equals mT where m is a factor and T is the period of the output signal of the pseudo-SIN-wave generation circuit 201. The factor m is represented by an integer and includes a deviation of ±35% of the integer. The factor m may include a deviation exceeding ±35% of the integer.

Consequently, the constant current driver 103 generates a drive current as shown in Fig. 4. In other words, the time kT during which the drive current in a supply-stopped state (0 mA) rises to a maximum amplitude (10 mA in Fig. 4) is an integer k multiple of the period T of the drive current. During the rise time kT the drive current performs an oscillation around the reference potential with a negative damping coefficient, such that the amplitude of the drive current increases during kt. The fall time nT during which the drive current with the maximum amplitude falls to the amplitude in the supply-stopped state is an integer n multiple of the period T of the drive current. During the fall time the drive current performs an oscillation around the reference potential with a positive damping coefficient, such that the amplitude of the drive current decreases during nT. The time mT during which the drive current with the maximum amplitude is supplied is an integer m multiple of the period T of the drive current. In the example considered here T is approximately 2 microseconds.

The positive and negative envelopes of the drive current have trapezoidal patterns, which are symmetric with respect to a line at 0 mA. In the case of Fig. 4, the rise time kT is equal to the fall time nT (kT=nT). The lengths of the respective times can be different from each other.

Since the drive current supplied to the transmitting coil 111 or 112 has such a signal waveform, the resonant capacitor 106 is not charged at the rise time.

In other words, when the supply of the drive current to the transmitting coil 111 or 112 is started, while the drive current with the maximum amplitude is supplied, and when the supply is stopped, the drive current is controlled such that the voltage across the capacitor 106 becomes an alternating signal concentrated at a reference potential Vref. Thus, the capacitor 106 is not charged at the rise time. According to the present embodiment, the reference potential Vref is approximately 1/2 of a power supply voltage. The reference potential Vref can be varied depending on circuitry.

For the voltage amplitude between the transmitting coil 111 or 112 and the predetermined reference potential Vref, therefore, as shown in Fig. 5, a voltage at some level is generated within each of the rise time kT and the fall time nT of the drive current. However, the voltage amplitude between the transmitting coil 111 or 112 and the reference potential Vref is suppressed to a low value within each of the rise time kT of the drive current, the time mT during which the drive current with the maximum amplitude is supplied with stability, and the fall time nT.

It is unnecessary that the amplitude-control-signal generation circuit 202 generates a signal to control the amplitudes of the output signals of the pseudo-SIN-wave generation circuit 201 at both of the rise and fall times. The amplitude-control-signal generation circuit 202 can generate a signal to control only the amplitudes of the output signals of the pseudo-SIN-wave generation circuit 201 at the rise time.

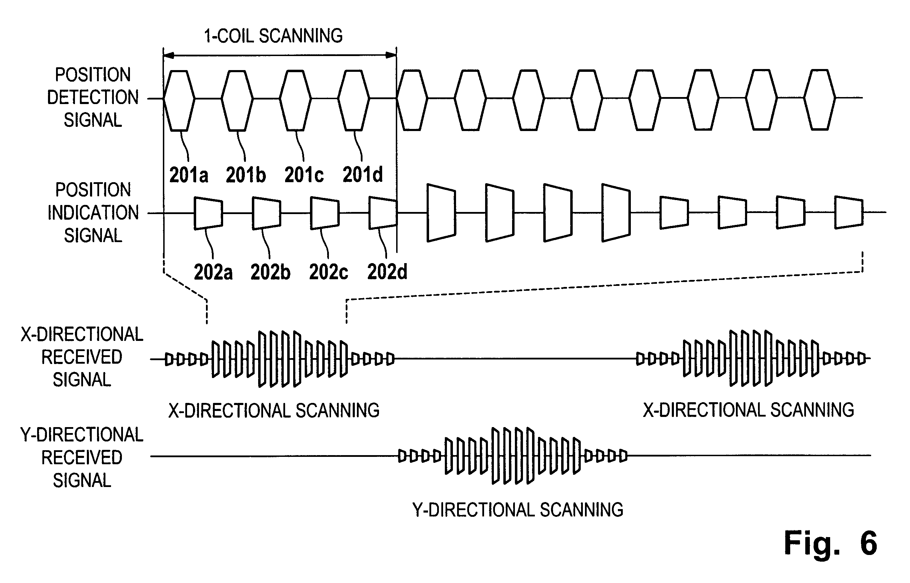

Fig. 6 is a timing chart of the operation of the position detecting device according to the present embodiment. According to the present embodiment, the X-directional sensor coils 114 are scanned and, after that, the Y-directional sensor coils 115 are scanned, thus detecting a position specified by the pointing device 120. Each of the X-directional sensor coils 114 and the Y-directional sensor coils 115 is scanned four times using position detection signals 201 a to 201 d each corresponding to the length of predetermined unit time, so that the position of the pointing device 120 is detected with higher accuracy.

For the receiving selection unit, the receiving amplifier, and the detection unit in Fig. 1, two systems for the X and Y directions can be provided so that the X-directional sensor coils 114 and the Y-directional sensor coils 115 are simultaneously scanned. In this case, X-directional scanning and Y-directional scanning are simultaneously performed.

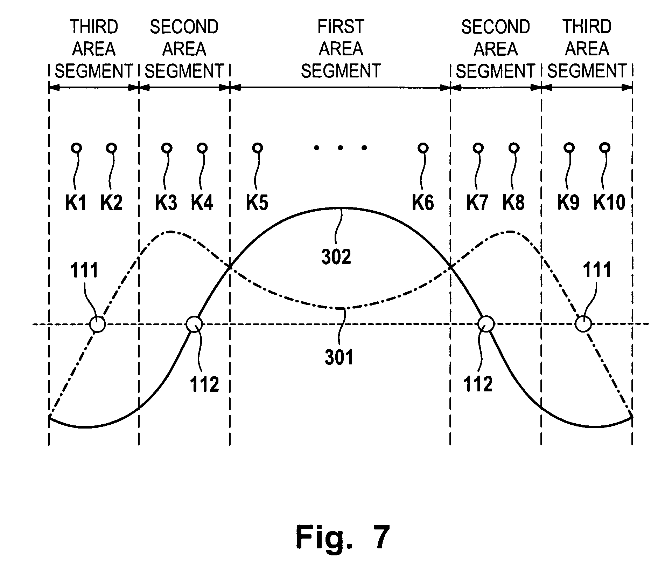

Fig. 7 is a diagram explaining the operation of the position detecting device according to the present embodiment. In the operation, any one of the transmitting coils 111 and 112 is selected and the selected coil is driven. Fig. 7 shows only the X-directional sensor coils 114. The selecting and driving operation is similarly performed with respect to the Y-directional sensor coils 115.

Referring to Fig. 7, reference numerals K1 to K10 indicates the X-directional sensor coils 114 in Fig. 1. Reference numeral 301 indicates a signal level of an alternating magnetic field generated from the outer transmitting coil 111 when the coil is driven. Reference numeral 302 indicates a signal level of an alternating magnetic field generated from the inner transmitting coil 112 when the coil is driven.

Referring to Fig. 7, the sensor area is divided into three segments, i.e., first to third area segments. In the first area segment, when the phase of the position detection signal is positive (first phase), the output level of the inner transmitting coil 112 is higher than that of the outer transmitting coil 111. In the second area segment, when the phase of the position detection signal is positive (first phase), the output level of the outer transmitting coil 111 is higher than that of the inner transmitting coil 112. In the third area segment, when the phase of the position detection signal is opposite to the positive phase, i.e., reversed or negative (second phase), the output level of the inner transmitting coil 112 is higher than that of the outer transmitting coil 111.

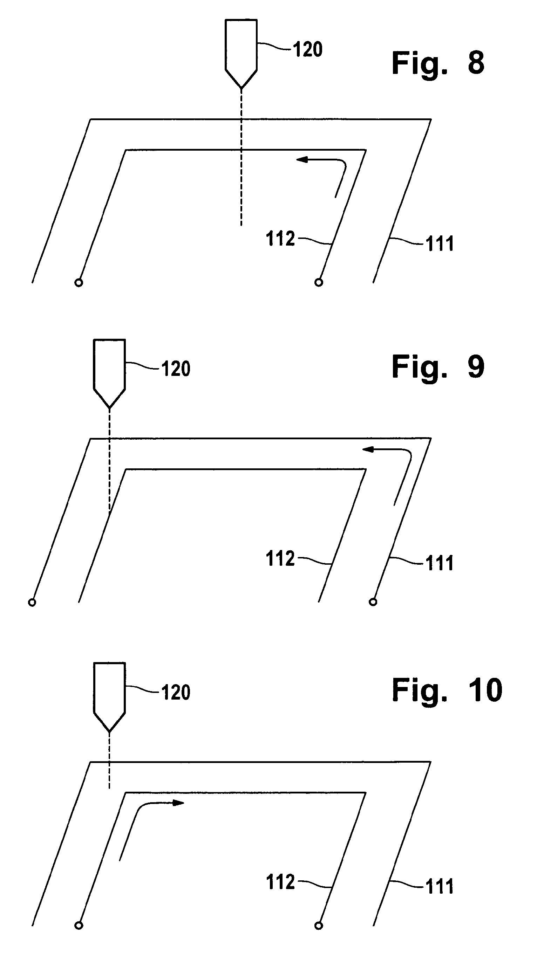

Figs. 8 to 10 are diagrams explaining the operation for switching between the transmitting coils 111 and 112 of the position detecting device according to the present embodiment.

The operation of the position detecting device 100 according to the present embodiment will now be described in detail with reference to Figs. 1 to 10.

In a case where the position detecting device 100 does not grasp a position specified by the pointing device 120 upon turning on, the position detecting device 100 performs the detecting operation which is called all-scanning.

The all-scanning operation will now be described in brief. In the position detecting device 100, under the control of the control unit 101, the receiving selection unit 108 sequentially scans the X-directional sensor coils K1 to K10 from the coil K1 to the coil K10. The transmitting coil 111 or 112 is selectively driven using the positive-phase or negative-phase drive signals (position detection signals) such that the position detection signals with the highest signal strength can be supplied to the pointing device 120 from the transmitting coil in the area segment where the pointing device 120 is positioned, thus detecting the position of the pointing device 120 in the X direction. The position in the Y direction is similarly detected. In other words, the receiving selection unit 108 sequentially scans the Y-directional sensor coils 115. The transmitting coil 111 or 112 is selectively driven by the positive-phase or negative-phase position detection signals such that the position detection signals with the highest signal strength can be supplied to the pointing device 120 from the transmitting coil in the area segment where the pointing device 120 is positioned, thus detecting the position of the pointing device 120 in the Y direction. Thus, the X and Y coordinates of the position of the pointing device 120 are detected.

The all-scanning position detecting operation will now be described in detail. Under the control of the control unit 101, the transmission signal generation unit 102 generates a position detection signal with the length of predetermined unit time. Under the control of the control unit 101, the constant current driver 103 amplifies the position detection signal and then generates the amplified signal. Under the control of the control unit 101, the transmitting selection unit 104 selects any one of the transmitting coils 111 and 112 and then supplies the position detection signal generated from the driver 103 to the selected transmitting coil.

The operation for selecting any one of the transmitting coils 111 and 112 will now be described with reference to Fig. 7. When the X-directional sensor coils K1, K2, K9, and K10 in the third area segment are selected to receive position indication signals from the pointing device 120, the inner transmitting coil 112 transmits the position detection signals to detect the position of the pointing device 120. In this case, under the control of the control unit 101, the transmission signal generation unit 102 generates the negative-phase position detection signals with the length of predetermined unit time to the inner transmitting coil 112.

When the X-directional sensor coils K3, K4, K7, and K8 in the second area segment receive the position indication signals from the pointing device 120, the outer transmitting coil 111 transmits the position detection signals each having the length of predetermined unit time to detect the position of the pointing device 120. In this case, under the control of the control unit 101, the transmission signal generation unit 102 generates the positive-phase position detection signals to the outer transmitting coil 111.

When the X-directional sensor coils K5, ..., and K6 in the first area segment receive the position indication signals from the pointing device 120, the inner transmitting coil 112 transmits the position detection signals with the length of predetermined unit time to detect the position of the pointing device 120. In this case, under the control of the control unit 101, the transmission signal generation unit 102 generates the positive-phase position detection signals to the inner transmitting coil 112.

The transmitting coil (e.g., the transmitting coil 111) selected by the transmitting selection unit 104 generates the position detection signal 201 a with the predetermined unit time length as shown in Fig. 6. The pointing device 120 receives the position detection signal 201 a from the selected transmitting coil 111 through electromagnetic coupling and then transmits a position indication signal 202a to the position detecting device 100.

In the position detecting device 100, the control unit 101 controls the receiving selection unit 108 to sequentially select and scan the X-directional sensor coils 114 from the coil K1 to the coil K10. Accordingly, the first X-directional sensor coil K1 receives the position indication signal 202a. In this case, since the position indication signal 202a is received by the X-directional sensor coil K1 arranged in the third area segment, the position detection signal 201 a is transmitted by the inner transmitting coil 112.

The position indication signal received by the X-directional sensor coil K1 is generated as an X-directional detection signal to the receiving amplifier 109 through the receiving selection unit 108. The X-directional detection signal is amplified by the receiving amplifier 109 and is then generated to the detection unit 110. The level of the X-directional detection signal is temporarily stored in a memory (not shown) serving as storage means included in the detection unit 110.

The X-directional sensor coil K1 is subjected to the above-mentioned operation four times. The levels of the four X-directional detection signals are stored in the memory of the detection unit 110. The mean value of the levels is stored as an X-directional detection signal level of the X-directional sensor coil K1 in the memory.

The X-directional sensor coils 114 are sequentially selected in order from the sensor coil K1 to the sensor coil K10 and each selected X-directional sensor coil is subjected to the above-mentioned operation four times. Thus, the detection unit 110 obtains the X-directional detection signal levels of the X-directional sensor coils K1 to K10 and stores the levels in the memory. As mentioned above, any one of the transmitting coils 111 and 112 which can supply the position detection signals with the highest signal strength to the pointing device 120 is selected depending on the position of the pointing device 120 in any one of the first to third area segments. The selected transmitting coil 111 or 112 is driven such that the phase of each position detection signal to be supplied to the pointing device 120 is not reversed. Consequently, the positive-phase position detection signals are always transmitted to the pointing device 120.

The detection unit 110 selects three higher levels of the X-directional detection signal levels of the X-directional sensor coils K1 to K10 and calculates the highest level on the basis of parabolic approximation using the selected three levels. The coordinate of the highest level corresponds to the X coordinate of the pointing device 120.

When the signal strength of the pointing device 120 does not reach a predetermined value, i.e., when the position of the pointing device 120 is not detected, scanning the X-directional sensor coils K1 to K10 is repeated.

Subsequently, the position detecting device 100 sequentially performs the above-mentioned operations to all of the Y-directional sensor coils 115.

In other words, the control unit 101 sequentially selects and scans the Y-directional sensor coils 115 from a coil L1 to a coil L10. The detection unit 110 calculates the Y coordinate of the pointing device 120 in the same way as the calculation for the X-directional sensor coils 114. The sensor area is also divided into three area segments in the Y direction in a manner similar to the division in Fig. 7. In the same way as the operation for selecting any one of the transmitting coils 111 and 112 depending on the position of the selected X-directional sensor coil 114, i.e., any of the first to third area segments and driving the selected transmitting coil, the transmitting selection unit 104 selects any one of the transmitting coils 111 and 112 according to the area segment which the selected Y-directional sensor coil 115 belongs to. The selected transmitting coil 111 or 112 is driven such that the phase of each position detection signal to be supplied to the pointing device 120 is not reversed. Thus, the positive-phase position detection signals are always transmitted to the pointing device 120.

As mentioned above, the detection unit 110 detects the X and Y coordinates of the pointing device 120.

The detection unit 110 generates data regarding the detected X and Y coordinates of the pointing device 120 to the control unit 101.

After the position of the pointing device 120 is detected, as will be described below, the control unit 101 controls the transmitting selection unit 104 to select any one of the transmitting coils 111 and 112 according to the relative positional relationship between the pointing device 120 and the transmitting coils 111 and 112 such that the position detection signals with the highest signal strength can be supplied to the pointing device 120 from the selected coil in the area segment where the pointing device 120 is positioned. In addition, the control unit 101 controls the transmission signal generation unit 102 to drive the selected transmitting coil by the positive-phase or negative-phase position detection signals such that the phase of each position detection signal having the length of predetermined unit time to be supplied to the pointing device 120 is always positive (not reversed).

In addition, the control unit 101 sequentially selects a predetermined number of sensor coils 114 and 115, which are arranged in the area segment where the pointing device 120 is positioned and in the vicinity of the area segment. The sensor coils 114 and 115 may include a plurality of sensor coils in the area segment where the pointing device 120 is positioned and a plurality of sensor coils in at least one area segment adjacent to the above area segment. The control unit 101 sequentially scans the selected coils. The above selecting and scanning operation is called sector scanning. The control unit 101 performs the sector scanning operation to detect the position of the pointing device 120.

The operation for selecting any one of the transmitting coils 111 and 112, driving the selected coil using the positive-phase or negative-phase position detection signals according to the relative positional relationship between the pointing device 120 and the transmitting coils 111 and 112, and performing the sector scanning operation will now be described. On the basis of whether the pointing device 120 is positioned inside or outside the selected transmitting coil, the phase of each signal to drive the selected transmitting coil is controlled such that the same-phase position detection signals each having the length of predetermined unit time are always transmitted to the pointing device 120.

Referring to Fig. 7, the transmitting selection unit 104 selects any one of the transmitting coils 111 and 112 such that the position detection signal having the highest signal strength can be transmitted to the pointing device 120 from the area segment where the pointing device 120 is positioned.

In other words, when the pointing device 120 is positioned in the first area segment, the position detection signals are transmitted from the inner transmitting coil 112, thus detecting the position of the pointing device 120. In this case, since the pointing device 120 is positioned inside the selected transmitting coil 112 (in the center of the sensor area 105), the phase of each position detection signal generated from the transmission signal generation unit 102 to the transmitting coil 112 is positive.

Fig. 8 shows the operation for driving the transmitting coil when the pointing device 120 is positioned in the first area segment. As shown in Fig. 8, when the pointing device 120 exists in the first area segment, the outer transmitting coil 111 is not driven and only the inner transmitting coil 112 is driven using the positive-phase position detection signals. Current flowing in the direction shown by the arrow, i.e., a positive-phase current is supplied to the inner transmitting coil 112, so that the positive-phase position detection signals each having the length of predetermined unit time are generated by an alternating magnetic field. The pointing device 120 is excited by the positive-phase position detection signal with the length of predetermined unit time through electromagnetic coupling.

When the pointing device 120 is positioned in the second area segment, the position detection signals are transmitted from the outer transmitting coil 111, thus detecting the position of the pointing device 120. In this case as well, since the pointing device 120 is positioned inside the selected transmitting coil 111, the phase of each position detection signal generated from the transmission signal generation unit 102 to the transmitting coil 111 is positive.

Fig. 9 shows the operation for driving the transmitting coil when the pointing device 120 is positioned in the second area segment. As shown in Fig. 9, when the pointing device 120 exists in the second area segment, the inner transmitting coil 112 is not driven and only the outer transmitting coil 111 is driven using the positive-phase position detection signals. Current flowing in the direction shown by the arrow, i.e., a positive-phase current is supplied to the outer transmitting coil 111, so that the positive-phase position detection signals are generated by the alternating magnetic field. The pointing device 120 is excited by the positive-phase position detection signal through electromagnetic coupling.

Fig. 10 shows the operation for driving the transmitting coil when the pointing device 120 is positioned in the third area segment. As shown in Fig. 10, when the pointing device 120 exists in the third area segment, the outer transmitting coil 111 is not driven and only the inner transmitting coil 112 is driven using the negative-phase position detection signals. Current flowing in the direction shown by the arrow, i.e., a reversed-phase current is supplied to the inner transmitting coil 112, so that the positive-phase position detection signals are generated by the alternating magnetic field. In this case as well, the pointing device 120 is excited by the positive-phase position detection signal through electromagnetic coupling.

As mentioned above, the sensor area 105 in which the transmitting coils 111 and 112 are arranged is divided into the three area segments and the signal transmitting means selects any one of the transmitting coils 111 and 112 such that the position detection signals with the highest signal strength can be supplied to the pointing device 120 positioned in any area segment.

The phase of each position detection signal to drive the transmitting coil is controlled on the basis of whether the pointing device 120 is positioned inside or outside the transmitting coil to be driven, i.e., in the inner portion or the outer potion of the sensor area. When the pointing device 120 is positioned outside the transmitting coil, the phase of the signal is reversed. Therefore, the pointing device 120 is always excited using the same-phase (positive-phase) position detection signal.

After the coil of the pointing device 120 is excited once, even if the excitation is stopped, an induced voltage gradually decreases. However, the induced voltage is not completely eliminated before the next excitation. The pointing device 120 has the residual induced voltage. To detect a position specified by the pointing device 120, calculation is performed in consideration of the residual induced voltage. If the pointing device 120 is excited by the negative-phase position detection signal according to the position of the pointing device 120, the residual induced voltage may be offset. Accordingly, the position indication signal does not exhibit the original strength. Unfortunately, the detected position of the pointing device 120 includes an error. According to the present embodiment, since the position detection signal transmitted from the transmitting coil has the same polarity (same phase), the position detection error caused by the residual induced voltage can be eliminated.

As mentioned above, the transmitting coil 111 or 112 is selected and driven. Synchronously with the selecting and driving operation, the control unit 101 performs the sector scanning operation for sequentially selecting the predetermined number of sensor coils 114 and 115, which are arranged in the area segment where the pointing device 120 is positioned and in the vicinity of the area segment, to scan each selected coil.

The above operation is repeated, thus detecting the position of the pointing device 120.

As mentioned above, according to the present embodiment of the present invention, the position detecting device 100 includes: the transmitting coils 111 and 112 for transmitting position detection signals to the pointing device 120; the sensor coils 114 and 115 for receiving signals from the pointing device 120; the signal transmitting means for supplying a drive current to the transmitting coil 111 or 112 such that the transmitting coil 111 or 112 generates the position detection signals; the receiving means for sequentially selecting the sensor coils 114 and 115 to receive signals from the pointing device 120; the detecting means for detecting a position specified by the pointing device 120 on the basis of the signals received by the receiving means; and the capacitor 106 connected to the transmitting coils 111 and 112 to constitute the series resonant circuits. The position detecting device 100 transmits and receives signals to/from the pointing device 120, which includes at least one coil and is used to specify a position, through electromagnetic coupling. The signal transmitting means controls the drive current such that the voltage across the capacitor 106 becomes an alternating signal concentrated at the reference potential.

In the position detecting device 100, when the supply of the drive current to the transmitting coil 111 or 112 is started, the signal transmitting means supplies the drive current such that time kT, during which the drive current in the supply-stopped state rises to the maximum amplitude, equals kT where k is a factor, which is represented by an integer and includes a deviation, and T is the period of the drive current.

Further, when the supply of the drive current is stopped, the signal transmitting means supplies the drive current such that time nT, during which the drive current with the maximum amplitude falls to the amplitude in the supply-stopped state, equals nT where n is a factor, which is represented by an integer and includes a deviation, and T is the period of the drive current.

Further, while the drive current is being supplied to the transmitting coil 111 or 112, the signal transmitting means supplies the drive current such that time mT, during which the drive current with the maximum amplitude is supplied, equals mT where m is a factor, which is represented by an integer and includes a deviation, and T is the period of the drive current.

The signal transmitting means includes: alternating-signal generating means for generating an alternating signal having a maximum amplitude at a predetermined level; amplitude control means for controlling the amplitude of the alternating signal at the rise time of the alternating signal generated from the alternating-signal generating means such that time kT, during which the alternating signal in a supply-stopped state rises to the maximum amplitude, equals kT where k is a factor, which is represented by an integer and includes a deviation, and T is the period of the alternating signal; and current supply means for supplying the drive current to the transmitting coil 111 or 112, the current having a waveform corresponding to the alternating signals with the amplitudes controlled by the amplitude control means.

When the supply of the drive current to the transmitting coil 111 or 112 is stopped, the amplitude control means controls the amplitude of the alternating signal such that time nT, during which the alternating signal with the maximum amplitude falls to the amplitude in the supply-stopped state, equals nT where n is a factor, which is represented by an integer and includes a deviation, and T is the period of the alternating signal. The current supply means supplies the drive current to the transmitting coil 111 or 112, the current having a waveform corresponding to the alternating signals with the amplitudes controlled by the amplitude control means.

In addition, while the drive current is being supplied to the transmitting coil 111 or 112, the amplitude control means controls the amplitude of the alternating signal such that time mT, during which the alternating signals each having the maximum amplitude are continuously generated, equals mT where m is a factor, which is represented by an integer and includes a deviation, and T is the period of the alternating signal. The current supply means supplies the drive current to the transmitting coil 111 or 112, the current having a waveform corresponding to the alternating signals with the amplitudes controlled by the amplitude control means.

Further, the amplitude control means controls the amplitudes of the alternating signals such that the positive and negative envelopes of the amplitudes each have a trapezoidal pattern.

Thus, the electromagnetic-coupling type position detecting device 100 can detect a position specified by the pointing device 120 with reliability in low voltage driving.

The signal transmitting means selects any one of the transmitting coils depending on the position of the pointing device 120 and supplies the drive current to the selected transmitting coil to transmit the position detection signals.

In addition, the signal transmitting means controls the phase of each signal to drive the transmitting coil 111 or 112 according to the position of the pointing device 120, i.e., the inside or outside of the transmitting coil to be driven such that the same-phase position detection signals are always transmitted to the pointing device 120.

The transmitting coil 111 is arranged outside the transmitting coil 112 concentrically.

According to the present embodiment, the sensor area is divided into three area segments. In the first area segment, when the phase of the position detection signal is the first phase, the transmitting coil 112 can transmit the position detection signal at a higher level than the transmitting coil 111. In the second area segment, when the phase of the position detection signal is the first phase, the transmitting coil 111 can transmit the position detection signal at a higher level than the transmitting coil 112. In the third area segment, when the phase of the position detection signal is the second phase opposite to the first phase, the transmitting coil 112 can transmit the position detection signal at a higher level than the transmitting coil 111. When the pointing device 120 is positioned in the first area segment, the signal transmitting means allows the transmitting coil 112 to transmit the position detection signal in the first phase. When the pointing device 120 is positioned in the second area segment, the signal transmitting means allows the transmitting coil 111 to transmit the position detection signal in the first phase. When the pointing device 120 is positioned in the third area segment, the signal transmitting means allows the transmitting coil 112 to transmit the position detection signal in the second phase.

When the pointing device 120 is positioned in the first area segment, the receiving means sequentially selects the predetermined sensor coils in the first area segment and in the vicinity of the first area segment to receive signals from the pointing device 120. When the pointing device 120 is positioned in the second area segment, the receiving means sequentially selects the predetermined sensor coils in the second area segment and in the vicinity of the second area segment to receive the signals from the pointing device 120. When the pointing device 120 is positioned in the third area segment, the receiving means sequentially selects the predetermined sensor coils in the third area segment and in the vicinity of the third area segment to receive the signals from the pointing device 120.

Therefore, a portion where the position of the pointing device 120 cannot be detected can be minimized.

According to the present embodiment, the amplitude-control-signal generation circuit 202 generates a trapezoidal signal, so that the rising edge and the falling edge of the drive current supplied to the transmitting coil are linearly varied. The form of a signal generated by the amplitude-control-signal generation circuit 202 may be changed such that the current monotonously increases along with a predetermined curve at the rise time and monotonously decreases along with the predetermined curve at the fall time. Further, the rising and falling edges may be varied along with various curves.

According to the present embodiment, the pseudo-SIN-wave generation circuit 201 generates pseudo-SIN-wave signals serving as alternating signals and the amplitude-control-signal generation circuit 202 controls the pseudo-SIN-wave signals, so that the drive current is generated as shown in Fig. 4. Data regarding the waveform of a signal as shown in Fig. 4 can be previously stored in the storage means. The signal transmitting means reads the waveform data in the storage means as necessary so that the drive current with the waveform in Fig. 4 is generated.

According to the present embodiment, the transmitting coils are arranged concentrically such that the process of calculating a position specified by the pointing device 120 can be easily performed. It is unnecessary to always arrange the transmitting coils concentrically. Various arrangement patterns of the transmitting coils can be used. For example, the transmitting coils can be overlapped with each other.

According to the present embodiment, the two transmitting coils are used. The number of transmitting coils can be varied.

In addition, it is unnecessary to always arrange the transmitting coils 111 and 112 outside the sensor coils 114 and 115.

According to the present embodiment, the transmitting coils are driven such that the position detection signals to excite the coil of the pointing device 120 are in phase with each other. When it is unnecessary to generate the signals in phase with each other, the position detection signals may be out of phase with each other.

The position detecting device 100 can be designed in such a manner that a resistor for calibration is arranged between the capacitor 106 and the ground potential, the node between the resistor and the capacitor 106 is connected to the receiving selection unit 108, a calibration signal is supplied from the transmission signal generation unit 102 to the receiving selection unit 108 through the transmitting coil 111 or 112, and the potential of the node between the resistor and the capacitor 106 is detected by the detection unit 110, thus performing calibration to prevent a measurement error caused by the difference in characteristics between the transmitting coils 111 and 112.

According to the present embodiment, signals are transmitted to the pointing device 120 from the transmitting coil 111 or 112, used only for transmission, arranged in the sensor unit 105 and signals from the pointing device 120 are received by the sensor coils 114 and 115 used only for detection. The present invention can also be applied to position detecting devices with other structures.

For example, the present invention can be applied to a position detecting device having the following structure: A plurality of transmitting and receiving coils used for transmission and detection are arranged in a matrix. The transmitting and receiving coils sequentially transmit signals to a pointing device including a coil through electromagnetic coupling. After transmitting the signal, each transmitting and receiving coil detects a signal from the pointing device through electromagnetic coupling. Thus, a position specified by the pointing device is detected. Further, the present invention can also be applied to a position detecting device with the following structure: A plurality of transmitting coils are arranged in a matrix. The transmitting coils sequentially transmit signals to a pointing device including a coil through electromagnetic coupling. The pointing device detects signals from the coils through electromagnetic coupling. A position specified by the pointing device is detected on the basis of the signals detected by the pointing device.

### List of reference numerals

### [FIG. 1]

- 101:: CONTROL UNIT
- 102:: TRANSMISSION SIGNAL GENERATION UNIT
- 103:: DRIVER
- 104:: TRANSMITTING SELECTION UNIT
- 108:: RECEIVING SELECTION UNIT
- 109:: RECEIVING AMPLIFIER
- 110:: DETECTION UNIT

### [FIG. 2]

- 103:: CONSTANT CURRENT DRIVER
- 201:: PSEUDO-SIN-WAVE GENERATION CIRCUIT
- 202:: AMPLITUDE-CONTROL-SIGNAL GENERATION CIRCUIT
- 203:: DIGITAL MULTIPLIER
- 204:: D/A CONVERTER
- a:: TO TRANSMITTING SELECTION UNIT 104

### [FIG. 3]

- 104:: TRANSMITTING SELECTION UNIT
- a:: TO CONSTANT CURRENT DRIVER 103

### [FIG. 4], [FIG. 12]

- a:: CURRENT AMPLITUDE (mA)
- b:: TIME (µs)

### [FIG. 5], [FIG. 13], [FIG. 14]

- a:: VOLTAGE AMPLITUDE (mV)
- b:: TIME (µs)

### [FIG. 6]

- a:: POSITION DETECTION SIGNAL
- b:: POSITION INDICATION SIGNAL
- c:: X-DIRECTIONAL RECEIVED SIGNAL
- d:: Y-DIRECTIONAL RECEIVED SIGNAL
- e:: 1-COIL SCANNING
- f:: X-DIRECTIONAL SCANNING
- g:: Y-DIRECTIONAL SCANNING

### [FIG. 7]

- a:: THIRD AREA SEGMENT
- b:: SECOND AREA SEGMENT
- c:: FIRST AREA SEGMENT

## Claims

1. A position detecting device for transmitting and receiving signals to/from a pointing device (120) through electromagnetic coupling to detect the position specified by the pointing device, comprising:
a transmitting coil (111, 112) for transmitting position detection signals to the pointing device;
a plurality of sensor coils (114) for receiving signals from the pointing device;
signal transmitting means (101, 102, 103, 104; 201, 202, 203, 204, 205, 203) for supplying a drive current to the transmitting coil such that the transmitting coil generates the position detection signals;
receiving means (108, 109) for sequentially selecting the sensor coils to receive the signals from the pointing device;
detecting means (110) for detecting the position specified by the pointing device on the basis of the signals received by the receiving means; and
a capacitor (106) connected to the transmitting coil to constitute a series resonant circuit, wherein
the signal transmitting means being adapted to control the drive current such that the voltage across the capacitor becomes an alternating signal concentrated at a reference potential.

2. The position detecting device of claim 1, the signal transmitting means operable to supply the drive current such that time during which the drive current in a supply-stopped state rises to a maximum amplitude is approximately an integer multiple of the period of the drive current, and when stopping the supply of the drive current to the transmitting coil, to supply the drive current such that time during which the drive current with the maximum amplitude falls to the amplitude in the supply-stopped state is approximately an integer multiple of the period of the drive current.

3. The position detecting device of claim 1 or 2, further comprising control means (101) for starting operation of the signal transmission means in order to start supplying the drive current to the transmission coil.

4. The device according to Claim 1, 2 or 3, the signal transmitting means being adapted to supply the drive current such that time during which the drive current with the maximum amplitude is supplied is approximately an integer multiple of the period of the drive current.

5. The device according to any one of Claims 1 to 4,
the signal transmitting means comprising:
alternating-signal generating means (201) for generating an alternating signal having a maximum amplitude at a predetermined level;
amplitude control means (202) for controlling the amplitude of the alternating signal generated from the alternating-signal generating means such that, at the rising edge of the alternating signal, time during which the alternating signal in a supply-stopped state rises to the maximum amplitude is approximately an integer multiple of the period of the alternating signal, and when the supply of the drive current to the transmitting coil is stopped, time during which the alternating signal with the maximum amplitude falls to the amplitude in the supply-stopped state is approximately an integer multiple of the period of the alternating signal; and
current supply means (203, 204, 205) for supplying the drive current to the transmitting coil, the current having a waveform corresponding to the alternating signals with the amplitudes controlled by the amplitude control means.

6. The device according to Claim 5, the amplitude control means being adapted to control the amplitude of the alternating signal such that time during which the alternating signals each having the maximum amplitude are continuously generated is approximately an integer multiple of the period of the alternating signal.

7. The device according to Claim 5 or 6, wherein the amplitude control means being adapted to control the amplitudes of the alternating signals such that the positive and negative envelopes of the amplitudes each have a trapezoidal pattern.

8. The device according to any one of Claims 1 to 7,
the transmitting coil comprising a plurality of transmitting coil segments , and
the capacitor being a single capacitor, of which one terminal being coupled to the transmitting coil segments.

9. The device according to any one of Claims 1 to 8, wherein a resonance frequency of each series resonant circuit, including one transmitting coil segment and the capacitor, is substantially equal to the period of the drive current.

10. The device according to Claim 8 or 9, wherein the signal transmitting means being adapted to select any one of the transmitting coil segments according to the position specified by the pointing device and to supply the drive current to the selected transmitting coil segment so as to transmit the position detection signals to the pointing device.

11. The device according to any one of Claims 8 to 10, wherein the transmitting coil segments are concentrically arranged.

12. The device according to any one of Claims 8 to 11, the signal transmitting means dividing a sensor area (105), where the transmitting coil segments are arranged, into a plurality of area segments, and the signal transmitting means being adapted to select any one of the transmitting coil segments in the area segment, where the pointing device is positioned, such that the position detection signals with the highest signal strength are supplied to the pointing device, and the signal transmitting means being adapted to drive the selected coil segment to supply the position detection signals to the pointing device.

13. The device according to any one of Claims 8 to 12, wherein, on the basis of the relative positional relationship between the position of the pointing device detected by the detecting means and the selected transmission soil segment, the signal transmitting means being adapted to drive the selected transmitting coil segment such that the phase of each position detection signal to be supplied to the pointing device is not reversed.

14. An electronic circuit for electromagnetic coupling with an external device, comprising:
a transmitting coil (111, 112) for transmitting detection signals to the external device;
a plurality of sensor coils (114) for receiving signals from the external device;
signal transmitting means (101, 102, 103, 104; 201, 202, 203, 204, 205, 203) for supplying a drive current to the transmitting coil;
receiving means (108, 109) for sequentially selecting the sensor coils to receive the signals from the external device; and
a capacitor (106) connected to the transmitting coil to constitute a series resonant circuit, wherein
the signal transmitting means being adapted to control the drive current such that the voltage across the capacitor becomes an alternating signal concentrated at a reference potential.

15. The electronic circuit of claim 14, the receiving means being adapted to receive an RFID signal from the external device and further comprising means for detection of an ID in the received RFID signal.
